# FASCICULE DE BREVET EUROPEEN

(11) **EP 1 714 114 B1**
(45) Date de publication et mention de la délivrance du brevet: **19.10.2016**
(21) Numéro de dépôt: 05717560.6
(22) Date de dépôt: 04.02.2005
(51) Int. Cl.: G01D 5/14

(54) **CAPTEUR MAGNÉTIQUE DE POSITION ANGULAIRE**
WINKELPOSITIONS-MAGNETSENSOR
ANGULAR POSITION MAGNETIC SENSOR

(30) Priorité: 11.02.2004 FR 0401344
(43) Date de publication de la demande: 25.10.2006
(73) Titulaire: Johnson Controls Technology Company, Holland, MI 49423 (US); Valeo Systèmes de Contrôle Moteur, 95520 Osny (FR)
(72) Inventeur: MAERKY, Christophe, F-95310 Saint-Ouen l'Aumône (FR); SFAXI, Mahmoud, F-75010 Paris (FR)
(74) Mandataire: Garcia, Christine
(86) Numéro de dépôt international: PCT/FR2005/000257
(87) Numéro de publication internationale: WO 2005/083366

(56) Documents cités:
- EP-A- 1 120 626
- EP-A- 1 353 140
- DE-A1- 4 025 837
- US-A- 5 544 000
- US-A1- 2003 052 669
- PATENT ABSTRACTS OF JAPAN vol. 0143, no. 43 (P-1082), 25 juillet 1990 (1990-07-25) & JP 02 122205 A (NIPPON DENSO CO LTD), 9 mai 1990 (1990-05-09) & JP 02 122205 A (NIPPON DENSO CO LTD) 9 mai 1990 (1990-05-09)

## Description

L'invention concerne un capteur magnétique de position angulaire, notamment pour vanne de régulation d'un système de recirculation de gaz d'échappement.

### ARRIERE-PLAN DE L'INVENTION

De telles vannes comportent deux éléments porteurs montés mobiles en rotation l'un par rapport à l'autre, par exemple le corps de vanne et l'axe du papillon de régulation de débit (ou l'axe de commande d'une soupape), et un capteur magnétique de position angulaire monté entre les éléments porteurs. Le capteur comporte d'une part un organe magnétique délimitant une zone utile dans laquelle s'étend un champ magnétique ayant des lignes de champ perpendiculaires à l'axe de rotation, et d'autre part un organe détecteur comportant au moins une sonde magnétosensible s'étendant dans la zone utile dans un plan perpendiculaire au plan des lignes de champ pour fournir un signal électrique fonction d'une orientation angulaire de la sonde par rapport aux lignes de champ qu'elle coupe.

En général, on cherche à obtenir des capteurs qui délivrent un signal linéaire. Mais cette exigence de linéarité impose de donner à l'organe magnétique une structure complexe de sorte que le signal obtenu est très sensible à un décalage de la sonde par rapport à sa position nominale dans la zone utile.

Le document JP09236403 décrit un capteur magnétique de position angulaire selon l'état de la technique.

### OBJET DE L'INVENTION

L'invention a pour objet un capteur magnétique de position angulaire peu sensible au positionnement de la sonde par rapport à l'organe magnétique.

### BREVE DESCRIPTION DE L'INVENTION

Selon l'invention, l'organe magnétique comporte deux tronçons d'aimant parallèles et deux pièces polaires en matériau ferromagnétique qui s'étendent perpendiculairement aux tronçons d'aimant en recouvrant les extrémités de ces derniers.

Une telle configuration permet d'établir à l'intérieur de la zone utile un champ magnétique quasi uniforme dont les lignes de champ s'étendent d'une pièce polaire à l'autre perpendiculairement à celles-ci de sorte que les lignes de champ sont toutes parallèles entre elles.

Ainsi, quelque soit la position de la sonde dans la zone utile, la sonde coupe des lignes de champ qui ont toutes le même angle et la même intensité, de sorte que le signal de la sonde est indépendant du positionnement de celle-ci dans la zone utile. Les tolérances de montage des pièces auxquelles le capteur est associé sont donc sans influence sur la qualité de la détection angulaire réalisée par le capteur.

En outre, cet organe magnétique est particulièrement simple à fabriquer.

Selon une variante de réalisation de l'invention, les tronçons d'aimant sont des barreaux aimantés. Les barreaux forment alors avec les pièces polaires un cadre magnétique délimitant la zone utile.

Selon une autre variante de réalisation de l'invention, l'organe magnétique comprend un aimant en U ayant des ailes qui forment les tronçons d'aimant et une base qui forme un fond de l'organe magnétique.

Ainsi, l'organe magnétique prend la forme d'une cuvette et la base de l'aimant contribue à augmenter l'intensité du champ magnétique dans la zone utile, ce qui permet d'améliorer la sensibilité du capteur.

Selon un aspect particulier de l'invention, les pièces polaires ont des extrémités chanfreinées. Ainsi, les chanfreins canalisent les lignes de champ et limitent les pertes magnétiques dans les extrémités des pièces polaires, ce qui permet également d'augmenter l'intensité du champ magnétique et donc d'améliorer la sensibilité du capteur.

Selon un autre aspect particulier de l'invention, le capteur est relié aux deux éléments porteurs de sorte que la sonde se déplace dans une plage de détection pour laquelle le signal de la sonde est sensiblement linéaire. Ainsi, on obtient une réponse quasi linéaire du capteur sans qu'il soit nécessaire de prévoir une forme particulière des pièces polaires.

### BREVE DESCRIPTION DES DESSINS

L'invention sera mieux comprise à la lumière de la description qui suit en référence aux figures des dessins annexés parmi lesquelles :
- la figure 1 est une vue en perspective éclatée d'un capteur magnétique de position angulaire selon l'invention ;
- la figure 2 est une vue en perspective de l'organe magnétique du capteur de position angulaire selon une première variante de réalisation;
- la figure 3 est une vue en perspective éclatée de l'organe magnétique du capteur de position angulaire selon une deuxième variante de réalisation ;
- la figure 4 est une vue de dessus de l'organe magnétique, sur laquelle sont illustrées les lignes de champ ;
- la figure 5 est un graphe montrant la variation du signal d'une sonde à effet Hall en fonction de la position angulaire relative des deux éléments porteurs sur lesquels le capteur est monté.

### DESCRIPTION DETAILLEE DE L'INVENTION

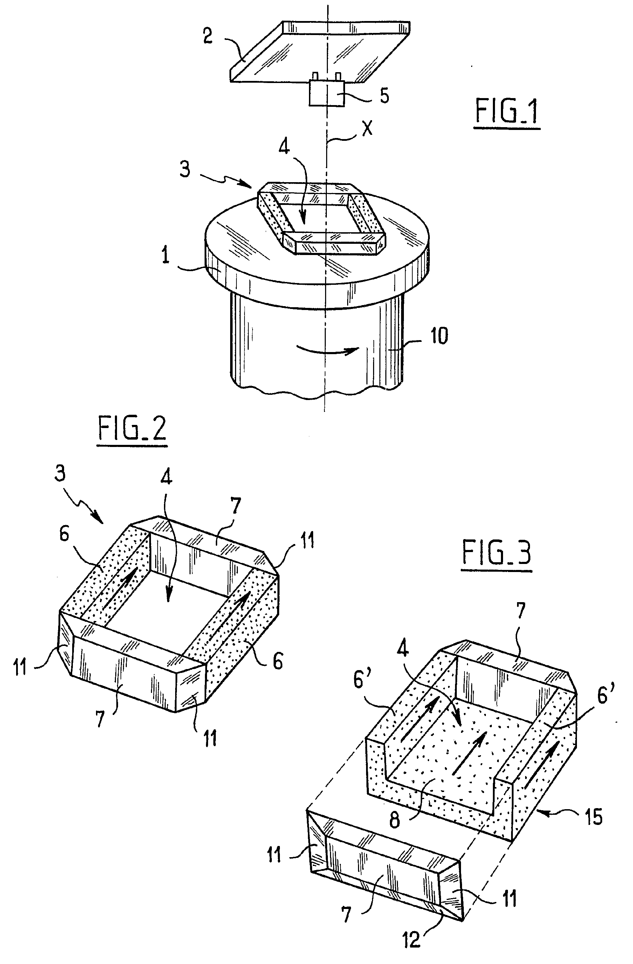

En référence à la figure 1, le capteur selon l'invention est destiné à être monté de façon connue en soi dans un dispositif comportant un premier élément porteur 1 et un second élément porteur 2 qui sont mobiles en rotation l'un par rapport à l'autre selon un axe de rotation X. Le premier élément porteur est par exemple une platine 1 fixée à l'extrémité d'un arbre de commande 10 de la position d'un papillon monté pour pivoter à l'intérieur du corps d'une vanne tandis que le second élément porteur est une platine 2 fixée au corps de vanne.

Le capteur magnétique de position angulaire comporte d'une part un organe magnétique 3 fixé sur le premier élément porteur 1 et délimitant intérieurement une zone utile 4, et d'autre part un organe détecteur comportant une sonde magnétosensible 5 fixée sur le second élément porteur 2. La sonde 5 est par exemple de type à effet Hall, ou encore de type magnétorésistif.

Sur la figure 1, les éléments 1,2 sont illustrées avant montage. Après montage, la sonde 5 s'étend à l'intérieur de la zone utile 4.

Dans une première variante de réalisation illustrée à la figure 2, l'organe magnétique 3 a la forme d'un cadre et comprend deux barreaux aimantés 6 disposés parallèlement pour délimiter deux côtés du cadre, et deux pièces polaires 7 en matériau ferromagnétique disposées perpendiculairement aux barreaux aimantés 6 pour délimiter deux autres côtés du cadre. Les pièces polaires 7 recouvrent les extrémités des barreaux aimantés 6 et ont des arêtes chanfreinées 11 selon les coins externes du cadre.

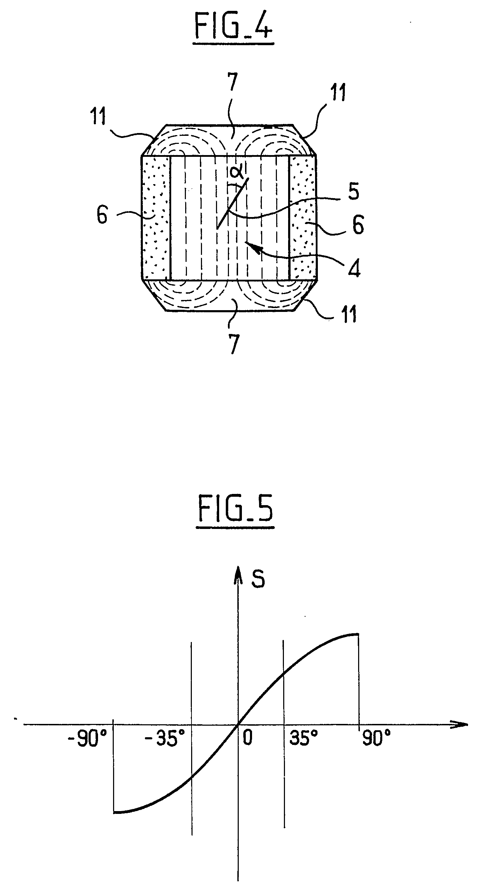

Le cadre magnétique ainsi formé délimite la zone utile 4 dans laquelle s'établit un champ magnétique dont les lignes sont illustrées en traits pointillés à la figure 4. Sur cette figure, on constate que les lignes de champ qui s'échappent des extrémités des barreaux aimantés 6 sont canalisés par les chanfreins 11 des pièces polaires 7, puis s'étendent d'une pièce polaire 7 à l'autre perpendiculairement à celles-ci. Le champ magnétique dans la zone utile 4 présente donc des lignes de champ parallèles et son intensité est quasi constante dans toute la zone utile 4.

Dans une autre variante de réalisation illustrée à la figure 3, l'organe magnétique 3 a la forme d'une cuvette et comprend d'une part un aimant en U 15 comportant des ailes 6' et une base 8 et d'autre part des pièces polaires 7 qui s'étendent pour recouvrir les extrémités de l'aimant en U 15. Les ailes 6' jouent un rôle similaire aux barreaux aimantés 6 de la variante de réalisation précédente. Comme auparavant, les pièces polaires présentent des arêtes chanfreinées 11 aux extrémités ; elles présentent également une arête inférieure chanfreinée 12 de sorte que les pièces polaires ont des arêtes chanfreinées selon le profil de l'aimant en U 15.

Dans cette variante de réalisation, les lignes de champs ont un aspect identique à celui illustré à la figure 4. La seule différence réside dans le fait que des lignes de champ supplémentaires s'échappent des extrémités de la base 8 pour transiter dans les arêtes chanfreinées 12 des pièces polaires 7, puis s'étendent d'une pièce polaire à l'autre parallèlement aux lignes de champ issues des ailes 6', contribuant ainsi à augmenter l'intensité du champ magnétique dans la zone utile 4.

Le plan supérieur délimitant le cadre ou la cuvette de l'organe magnétique 3 étant disposé perpendiculairement à l'axe de rotation X, les lignes de champ s'étendent donc perpendiculairement à l'axe de rotation X. En position de montage la sonde 5 s'étend donc dans la zone utile 4 dans un plan perpendiculaire au plan des lignes de champ.

L'utilisation selon l'invention d'un organe magnétique générant un champ uniforme présente plusieurs avantages :
- un tel organe magnétique est particulièrement facile à fabriquer. Les pièces composant l'organe magnétique 3 de l'invention sont de forme simple et peuvent être collées entre elles ou enchâssées dans un support amagnétique ;
- en outre, quelque soit le positionnement de la sonde 5, la sonde 5 coupe des lignes de champ qui ont toutes le même angle par rapport à la sonde et la même intensité. Un tel capteur est donc insensible à un désalignement des deux éléments tournants, ou à un excentrement de la sonde 5 ou de l'organe magnétique 3 par rapport à l'axe de rotation X. Un tel capteur est également insensible à une variation de l'enfoncement de la sonde 5 dans la zone utile 4, pour autant que la sonde 5 reste plongée entièrement dans le champ magnétique régnant dans la zone utile 4.

La figure 5 illustre le signal de sortie sinusoïdal d'une sonde à effet Hall en fonction de l'angle α (visible à la figure 4) de la sonde autour de l'axe X. De préférence, la sonde 5 et l'organe magnétique 3 sont reliés aux éléments porteurs de façon que lors d'un mouvement relatif des éléments porteurs la sonde 5 pivote par rapport à l'organe magnétique 3 dans une plage utile de 35° de part et d'autre d'une position pour laquelle le champ magnétique mesuré par la sonde 5 est nul. Dans cette plage, le signal S de la sonde 5 reste sensiblement linéaire.

L'invention n'est pas limitée au mode de réalisation particulier qui vient d'être décrit, mais englobe plus généralement tout variante entrant dans le cadre de l'invention tel que défini par les revendications.

En particulier, bien que les pièces polaires 7 aient été illustrés avec des chanfreins, ce qui permet de limiter les pertes magnétiques en éliminant des zones mortes dans lesquelles les lignes de champ chemineraient inutilement, les pièces polaires 7 peuvent présenter des angles vifs.

Bien que l'organe détecter associé à l'organe magnétique soit ici composé d'une seule sonde 5, le détecteur peut comporter plusieurs sondes superposées ou décalées angulairement.

## Revendications

1. Capteur magnétique de position angulaire monté entre deux éléments porteurs (1,2) mobiles en rotation l'un part rapport à l'autre autour d'un axe de rotation (X), le capteur comportant d'une part un organe magnétique (3) délimitant une zone utile (4) dans laquelle s'étend un champ magnétique ayant des lignes de champ perpendiculaires à l'axe de rotation (X), et d'autre part un organe détecteur comprenant au moins une sonde (5) s'étendant dans la zone utile (4) de l'organe magnétique (3) pour fournir un signal (S) en fonction d'une orientation angulaire de la sonde (5) par rapport aux lignes de champs de la zone utile, l'organe magnétique comportant deux tronçons d'aimant (6 ; 6') parallèles et deux pièces polaires allongées (7) en matériau ferromagnétique qui s'étendent en recouvrant les extrémités de ces derniers, les pièces polaires s'étendant perpendiculairement auxtronçons d'aimant (6 ; 6'), l'organe magnétique (3) étant agencé pour créer des lignes de champs s'étendant d'une pièce polaire (7) à l'autre, perpendiculairement auxdites pièces polaires (7) de sorte que les lignes de champs sont toutes parallèles entre elles, les pièces polaires (7) ayant des extrémités chanfreinées (11).

2. Capteur selon la revendication 1, **caractérisé en ce que** les tronçons d'aimant sont des barreaux aimantés (6).

3. Capteur selon la revendication 1, **caractérisé en ce que** l'organe magnétique comprend un aimant en U (15) ayant des alles (6') qui forment les tronçons d'aimant et une base (8) qui forme un fond de l'organe magnétique (3).

4. Capteurselon la revendication 3, **caractérisé en ce que** les pièces polaires (7) ont des arêtes chanfreinées (11,12) selon un profil de l'aimant en U.

5. Capteur selon la revendication 1, **caractérisé en ce que** le capteur est relié aux deux éléments porteurs (1,2) de sorte que la sonde (5) se déplace dans une plage de détection pour laquelle le signal (S) du détecteur (S) est sensiblement linéaire.

6. Capteur selon la revendication 5, **caractérisé en ce que** la plage utile s'étend sur 35° de part et d'autre de la position pour laquelle le champ magnétique mesuré par la sonde (5) est nul.

7. Vanne comprenant un corps et un arbre (10) de commande de la position d'un papillon monté pour pivoter à l'intérieur du corps et un capteur selon l'une quelconque des revendications précédentes, l'organe magnétique (3) étant fixé à une platine (1) fixée à l'extrémité de l'arbre et la sonde (5) étant fixée à une platine (2) fixée au corps.

8. Capteur magnétique de position angulaire monté entre deux éléments porteurs (1,2) mobiles en rotation l'un part rapport à l'autre autour d'un axe de rotation (X), le capteur comportant d'une part un organe magnétique (3) délimitant une zone utile (4) dans laquelle s'étend un champ magnétique ayant des lignes de champ perpendiculaires à l'axe de rotation (X), et d'autre part un organe détecteur comprenant au moins une sonde (5) s'étendant dans la zone utile (4) de l'organe magnétique (3) pour fournir un signal (S) en fonction d'une orientation angulaire de la sonde (5) par rapport aux lignes de champs de la zone utile, l'organe magnétique comportant deux tronçons d'aimant (6 ; 6') parallèles et deux pièces polaires allongées (7) en matériau ferromagnétique qui s'étendent en recouvrant les extrémités de ces derniers, les pièces polaires s'étendant perpendiculairement aux tronçons d'aimant (6 ; 6'), l'organe magnétique (3) étant agencé pour créer des lignes de champs s'étendant d'une pièce polaire (7) à l'autre, perpendiculairement auxdites pièces polaires (7) de sorte que les lignes de champs sont toutes parallèles entre elles, l'organe magnétique comprenant un aimant en U (15) ayant des ailes (6') qui forment les tronçons d'aimant et une base (8) qui forme un fond de l'organe magnétique (3).

## Patentansprüche

1. Magnetischer Winkelstellungssensor, der zwischen zwei Trägerelementen (1, 2) montiert ist, die um eine Drehachse (X) zueinander drehbeweglich sind, wobei der Sensor einerseits ein magnetisches Bauteil (3), das einen Nutzbereich (4) begrenzt, in dem sich ein Magnetfeld erstreckt, das Feldlinien lotrecht zur Drehachse (X) hat, und andererseits ein Erfassungsbauteil aufweist, das mindestens eine Sonde (5) enthält, die sich im Nutzbereich (4) des magnetischen Bauteils (3) erstreckt, um ein Signal (S) abhängig von einer Winkelausrichtung der Sonde (5) bezüglich der Feldlinien des Nutzbereichs zu liefern, wobei das magnetische Bauteil zwei parallele Magnetabschnitte (6; 6') und zwei längliche Polstücke (7) aus ferromagnetischem Material aufweist, die sich erstrecken, indem sie die Enden dieser letzteren bedecken, wobei die Polstücke sich lotrecht zu den Magnetabschnitten (6; 6') erstrecken, wobei das magnetische Bauteil (3) eingerichtet ist, um Feldlinien zu erzeugen, die sich von einem Polstück (7) zum anderen lotrecht zu den Polstücken (7) erstrecken, so dass die Feldlinien alle untereinander parallel sind, wobei die Polstücke (7) abgeschrägte Enden (11) haben.

2. Sensor nach Anspruch 1, **dadurch gekennzeichnet, dass** die Magnetabschnitte magnetisierte Stäbe (6) sind.

3. Sensor nach Anspruch 1, **dadurch gekennzeichnet, dass** das magnetische Bauteil einen U-förmigen Magnet (15) enthält, der Schenkel (6'), die die Magnetabschnitte bilden, und eine Basis (8) hat, die einen Boden des magnetischen Bauteils (3) bildet.

4. Sensor nach Anspruch 3, **dadurch gekennzeichnet, dass** die Polstücke (7) abgeschrägte Kanten (11, 12) gemäß einem Profil des U-förmigen Magnets haben.

5. Sensor nach Anspruch 1, **dadurch gekennzeichnet, dass** der Sensor mit den zwei Trägerelementen (1, 2) so verbunden ist, dass die Sonde (5) sich in einem Erfassungsbereich verschiebt, für den das Signal (S) des Detektors (5) im Wesentlichen linear ist.

6. Sensor nach Anspruch 5, **dadurch gekennzeichnet, dass** der Nutzbereich sich zu beiden Seiten der Stellung über 35° erstreckt, für die das von der Sonde (5) gemessene Magnetfeld Null ist.

7. Ventil, das einen Körper und eine Welle (10) zur Steuerung der Stellung eines Drosselventils, das montiert ist, um im Inneren des Körpers zu schwenken, und einen Sensor nach einem der vorhergehenden Ansprüche enthält, wobei das magnetische Bauteil (3) an einer Platte (1) befestigt ist, die am Ende der Welle befestigt ist, und die Sonde (5) an einer Platte (2) befestigt ist, die am Körper befestigt ist.

8. Magnetischer Winkelstellungssensor, der zwischen zwei um eine Drehachse (X) zueinander drehbeweglichen Trägerelementen (1, 2) montiert ist, wobei der Sensor einerseits ein magnetisches Bauteil (3), das einen Nutzbereich (4) begrenzt, in dem sich ein Magnetfeld erstreckt, das Feldlinien lotrecht zur Drehachse (X) hat, und andererseits ein Erfassungsbauteil aufweist, das mindestens eine Sonde (5) enthält, die sich im Nutzbereich (4) des magnetischen Bauteils (3) erstreckt, um ein Signal (S) abhängig von einer Winkelausrichtung der Sonde (5) bezüglich der Feldlinien des Nutzbereichs zu liefern, wobei das magnetische Bauteil zwei parallele Magnetabschnitte (6; 6') und zwei längliche Polstücke (7) aus ferromagnetischem Material aufweist, die sich erstrecken, indem sie die Enden dieser letzteren bedecken, wobei die Polstücke sich lotrecht zu den Magnetabschnitten (6; 6') erstrecken, wobei das magnetische Bauteil (3) eingerichtet ist, um Feldlinien zu erzeugen, die sich von einem Polstück (7) zum anderen lotrecht zu den Polstücken (7) erstrecken, so dass die Feldlinien alle zueinander parallel sind, wobei das magnetische Bauteil einen U-förmigen Magnet (15) enthält, der Schenkel (6'), die die Magnetabschnitte bilden, und eine Basis (8) hat, die einen Boden des magnetischen Bauteils (3) bildet.

## Claims

1. Magnetic angular position sensor mounted between two bearing elements (1, 2) rotationally mobile relative to one another about an axis of rotation (X), the sensor comprising, on the one hand, a magnetic member (3) delimiting a useful zone (4) in which extends a magnetic field having field lines at right angles to the axis of rotation (X), and, on the other hand, a detector member comprising at least one probe (5) extending into the useful zone (4) of the magnetic member (3) to supply a signal (S) as a function of an angular orientation of the probe (5) relative to the field lines of the useful zone, the magnetic member comprising two parallel magnet sections (6; 6') and two elongate pole pieces (7) of ferromagnetic material which extend to cover the ends of the latter, the pole pieces extending at right angles to the magnet sections (6; 6'), the magnetic member (3) being arranged to create field lines extending from one pole piece (7) to the other, at right angles to said pole pieces (7) such that the field lines are all parallel to one another, the pole pieces (7) having chamfered ends (11).

2. Sensor according to Claim 1, **characterized in that** the magnet sections are magnetized bars (6).

3. Sensor according to Claim 1, **characterized in that** the magnetic member comprises a U-shaped magnet (15) having legs (6') which form the magnet sections and a base (8) which forms a bottom of the magnetic member (3).

4. Sensor according to Claim 3, **characterized in that** the pole pieces (7) have edges chamfered (11, 12) according to a profile of the U-shaped magnet.

5. Sensor according to Claim 1, **characterized in that** the sensor is linked to the two bearing elements (1, 2) such that the probe (5) is displaced in a detection range for which the signal (S) from the detector (5) is substantially linear.

6. Sensor according to Claim 5, **characterized in that** the useful range extends over 35° on either side of the position for which the magnetic field measured by the probe (5) is nil.

7. Valve comprising a body and a shaft (10) controlling the position of a butterfly disc mounted to pivot inside the body and a sensor according to any one of the preceding claims, the magnetic member (3) being fixed to a plate (1) fixed to the end of the shaft and the probe (5) being fixed to a plate (2) fixed to the body.

8. Magnetic angular position sensor mounted between two bearing elements (1, 2) rotationally mobile relative to one another about an axis of rotation (X), the sensor comprising, on the one hand, a magnetic member (3) delimiting a useful zone (4) in which extends a magnetic field having field lines at right angles to the axis of rotation (X), and, on the other hand, a detector member comprising at least one probe (5) extending into the useful zone (4) of the magnetic member (3) to supply a signal (S) as a function of an angular orientation of the probe (5) relative to the field lines of the useful zone, the magnetic member comprising two parallel magnet sections (6; 6') and two elongate pole pieces (7) of ferromagnetic material which extend to cover the ends of the latter, the pole pieces extending at right angles to the magnet sections (6; 6'), the magnetic member (3) being arranged to create field lines extending from one pole piece (7) to the other, at right angles to said pole pieces (7) such that the field lines are all parallel to one another, the magnetic member comprising a U-shaped magnet (15) having legs (6') which form the magnet sections and a base (8) which forms a bottom of the magnetic member (3).
